# EUROPEAN PATENT SPECIFICATION

(11) **EP 3 978 273 B1**
(45) Date of publication and mention of the grant of the patent: **17.07.2024**
(21) Application number: 21189918.2
(22) Date of filing: 05.08.2021
(51) Int. Cl.: B60C 11/03, B60C 11/01

(54) **TIRE**
REIFEN
PNEUMATIQUE

(30) Priority: 02.10.2020 JP 2020167552
(43) Date of publication of application: 06.04.2022
(73) Proprietor: Sumitomo Rubber Industries, Ltd., Kobe-shi, Hyogo-ken 651-0072 (JP)
(72) Inventor: OKAWARA, Renya, Kobe-shi, Hyogo, 651-0072 (JP)
(74) Representative: Manitz Finsterwald Patent- und Rechtsanwaltspartnerschaft mbB

(56) References cited:
- EP-A1- 2 159 080
- EP-A1- 3 228 478
- EP-A2- 2 202 097
- WO-A1-2019/159544
- JP-A- 2006 062 469
- JP-A- 2007 203 863
- JP-A- H09 123 713
- JP-A- H09 150 608
- US-B2- 9 616 715

## Description

### BACKGROUND

### Technical Field

The invention relates to a tire.

### Related Art

A sport utility vehicle (SUV) travels not only on paved roads but also on rough terrain. For an SUV tire, a tread is adopted in which a large number of blocks are formed by carving circumferential grooves and lateral grooves. This tire is desired to be quiet in consideration of driving in urban areas.

When a tire contacts a road surface, it hits the road surface. At this time, a sound (hereinafter pattern noise) is generated. Large pattern noise increases vehicle external noise. Studies on pattern noise reduction with the aim of improving quietness of the tire have been conducted (for example, see Japanese Patent Laid-Open No. 2004-58839).

A thick tread is able to attenuate input received at the time of contacting the road surface, and contributes to reduction of pattern noise. However, the thick tread increases the mass and rolling resistance of the tire.

When a tread has a sipe carved therein, the input received at the time of contacting the road surface is attenuated. The sipe contributes to reduction of pattern noise. However, there is a concern that the sipe may become a starting point of cracks and chipping resistance during rough road travel may be reduced.

When groove capacity of an axial groove is reduced, pattern noise is reduced. However, in this case, there is a concern that off-road performance such as mud performance or rock performance may deteriorate.

For the SUV tire, it is difficult to achieve a good balance among quietness, chipping resistance, and off-road performance. It is desired to establish a technique capable of reducing pattern noise while ensuring the required chipping resistance and off-road performance.

JP H09-150608 A discloses a tire according to the preamble of claim 1. Other tires are known from, for example, JP 2006-62469 A, JP H09-123713 A, EP 3 228 478 A1, JP 2007-203863 A, and WO 2019/159544 A1.

The invention provides a tire that is able to reduce pattern noise while ensuring the required chipping resistance and off-road performance.

### SUMMARY

A tire according to the invention includes a tread contacting a road surface. At least two circumferential grooves are carved in the tread, and at least three land parts are formed arranged side by side in an axial direction. Among the at least three land parts, a land part located on an outer side in the axial direction is a shoulder land part. The shoulder land part includes multiple shoulder blocks arranged side by side in a circumferential direction. The shoulder land part is divided into a grounding zone from an equatorial plane side to a grounding end and a non-grounding zone from the grounding end to an end of the tread. Multiple first dimples having a cylindrical shape or being tapered toward their bottom are carved in the shoulder blocks in the grounding zone. A ratio of a radial distance from the grounding end to the end of the tread to a cross-sectional height is 5 % or more to 15 % or less.

### BRIEF DESCRIPTION OF THE DRAWINGS

FIG. 1 is a cross-sectional view showing a part of a tire according to an embodiment of the invention.
FIG 2 is a developed view showing a tread surface of a tire.
FIG 3 is a perspective view showing a part of a tread.
FIG 4 is a cross-sectional view of a first dimple.
FIG 5 is a cross-sectional view of a second dimple.

### DESCRIPTION OF THE EMBODIMENTS

A tire according to the invention includes a tread contacting a road surface. At least two circumferential grooves are carved in the tread, and at least three land parts are formed arranged side by side in an axial direction. Among the at least three land parts, a land part located on an outer side in the axial direction is a shoulder land part. The shoulder land part includes multiple shoulder blocks arranged side by side in a circumferential direction. The shoulder land part is divided into a grounding zone from an equatorial plane side to a grounding end and a non-grounding zone from the grounding end to an end of the tread. Multiple first dimples are carved in the shoulder blocks in the grounding zone.

Preferably, in the tire, the first dimples have a diameter of 2 mm or more to 5 mm or less. A ratio of a depth of the first dimples to a groove depth of the circumferential grooves is 25% or more to 65% or less.

Preferably, in the tire, the first dimples are disposed at intervals from the equatorial plane side toward the end of the tread. A ratio of the interval between the first dimples to a width of the shoulder blocks is 0.10 or more to 0.20 or less.

Preferably, in the tire, an angle formed by a wall surface of the first dimples with respect to a centerline is 0° or more to 30° or less.

Preferably, in the non-grounding zone of the tire, a buttress extending in the circumferential direction is defined between the shoulder blocks and the end of the tread, and multiple second dimples are carved in the buttress.

Preferably, in the tire, the second dimples have a diameter of 2 mm or more to 5 mm or less. A ratio of a depth of the second dimples to a groove depth of the circumferential grooves is 5% or more to 15% or less.

Preferably, in the tire, the second dimples are disposed at intervals in the circumferential direction. The interval between the second dimples is 5.0 mm or more to 10.0 mm or less.

Preferably, in the tire, an angle formed by a wall surface of the second dimples with respect to a centerline is 0° or more to 30° or less.

A ratio of a radial distance from the grounding end to the end of the tread to a cross-sectional height is 5% or more to 15% or less.

According to the invention, a tire may be obtained that is able to reduce pattern noise while ensuring the required chipping resistance and off-road performance.

The invention is hereinafter described in detail based on embodiments with reference to the drawings as appropriate.

In the disclosure, a state in which a tire is assembled onto a normal rim, an internal pressure of the tire is adjusted to a normal internal pressure, and the tire has no load applied thereto is referred to as a normal state. In the disclosure, unless otherwise specified, dimensions and angles of each part of the tire are measured in the normal state.

The term "normal rim" means a rim specified according to standards with which the tire complies. The "standard rim" included in applicable rims defined in the Japan Automobile Tyre Manufacturers Association (JATMA) standards, the "design rim" in the Tire and Rim Association (TRA) standards, and the "measuring rim" in the European Tyre and Rim Technical Organisation (ETRTO) standards are normal rims.

The term "normal internal pressure" means an internal pressure specified according to standards with which the tire complies. The "maximum air pressure" in the JATMA standards, the "maximum value" described in "Tire Load Limits at Various Cold Inflation Pressures" in the TRA standards, and the "inflation pressure" in the ETRTO standards are normal internal pressures. When the tire is for a passenger car, the normal internal pressure is 180 kPa unless otherwise specified.

The term "normal load" means a load specified according to standards with which the tire complies. The "maximum load capacity" in the JATMA standards, the "maximum value" described in "Tire Load Limits at Various Cold Inflation Pressures" in the TRA standards, and the "load capacity" in the ETRTO standards are normal loads. In the case where the tire is for a passenger car, the normal load is a load equivalent to 88% of the aforesaid load unless otherwise specified.

In the disclosure, a load index (LI) is, for example, an indicator defined in the JATMA standards that expresses, in the form of an index, the maximum mass allowed to be applied to a tire under specified conditions, that is, the maximum load capacity.

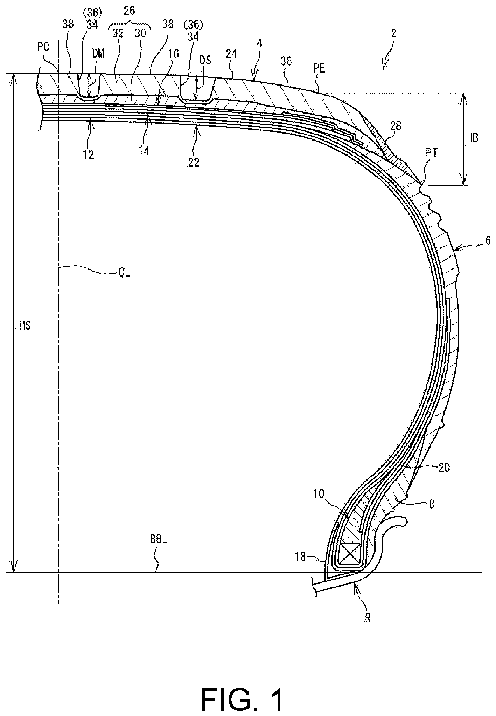

FIG. 1 shows an example of a pneumatic tire 2 (hereinafter tire 2) according to an embodiment of the invention. The tire 2 is mounted on a passenger car. In detail, the tire 2 is mounted on a sport utility vehicle (SUV) such as a four-wheel drive (4WD) vehicle in consideration of traveling not only on paved roads but also on rough terrain. In FIG 1, the tire 2 is assembled onto a rim R. The rim R is a normal rim. The inside of the tire 2 is filled with air, and an internal pressure of the tire 2 is adjusted to a normal internal pressure.

FIG. 1 shows a part of a cross section of the tire 2 along a plane containing an axis of rotation of the tire 2. In FIG 1, a left-right direction is an axial direction of the tire 2, and an up-down direction is a radial direction of the tire 2. A direction perpendicular to the paper surface of FIG. 1 is a circumferential direction of the tire 2. In FIG 1, a dot-and-dash line CL represents an equatorial plane of the tire 2.

In FIG 1, a solid line BBL extending in the axial direction is a bead base line. The bead base line is a line that defines a rim diameter (see JATMA and so on) of the rim R.

The tire 2 includes a tread 4, a pair of sidewalls 6, a pair of clinches 8, a pair of beads 10, a carcass 12, a belt 14, a band 16, a pair of chafers 18, a pair of fillers 20, and an inner liner 22. In the tire 2, the sidewall 6, the clinch 8, the bead 10, the carcass 12, the belt 14, the band 16, the chafer 18, the filler 20 and the inner liner 22 are formed based on techniques commonly used in SUV tires, and a detailed description of these components is omitted.

The tread 4 contacts a road surface on its outer surface, that is, a tread surface 24. In FIG 1, a position indicated by symbol PE is a specific position on the tread surface 24. The specific position PE corresponds to an axially outer end of a grounding surface of the tire 2 with the road surface. In the tire 2, the specific position PE is a grounding end. The grounding end PE is a position on an outer surface of the tire 2 corresponding to the axially outer end of the grounding surface of the tire 2 with the road surface.

The grounding surface for specifying the grounding end PE may be obtained using, for example, a grounding surface shape measurement device (not shown). In the grounding surface shape measurement device, the grounding surface may be obtained in the following manner. The tire 2 is assembled onto the rim R. In a state in which the internal pressure of the tire 2 is adjusted to 230 kPa and a camber angle of the tire 2 is set to 0 °, a load equivalent to 70% of the mass and represented by a load index is applied as a longitudinal load to the tire 2, and the tire 2 is brought into contact with a flat road surface.

The tread 4 includes a tread body 26 and a pair of wings 28. The tread body 26 includes a base layer 30 and a cap layer 32.

The base layer 30 is laminated on the band 16. The base layer 30 is made of crosslinked rubber having low heat build-up properties. The cap layer 32 is located radially outside the base layer 30 and covers the entire base layer 30. The cap layer 32 is made of crosslinked rubber in consideration of wear resistance and grip performance. An outer surface of the cap layer 32 forms a part of the tread surface 24.

Each wing 28 is located outside the tread body 26 in the axial direction. In the tire 2, the tread body 26 and the sidewall 6 are joined via the wing 28. The wing 28 is made of crosslinked rubber in consideration of adhesiveness.

In the tire 2, the tread surface 24 is composed of the outer surface of the cap layer 32 and an outer surface of the wing 28. In FIG 1, symbol PT indicates an end of the tread surface 24, in other words, an end of the tread 4. The end PT of the tread 4 is also a boundary between the tread 4 and the sidewall 6 on the outer surface of the tire 2. Although a boundary between the cap layer 32 and the wing 28 on the outer surface of the tire 2 is provided axially outside the grounding end PE, a specific position thereof is appropriately determined in consideration of the specifications of the tire 2.

In FIG 1, symbol PC indicates an equator of the tire 2. The equator PC is represented by an intersection of the tread surface 24 and the equatorial plane. In FIG 1, a length represented by a two-way arrow HS is a cross-sectional height of the tire 2 (see JATMA and so on). The cross-sectional height HS is represented by a radial distance from the bead base line to the equator PC. In the tire 2, the cross-sectional height HS is measured in the normal state.

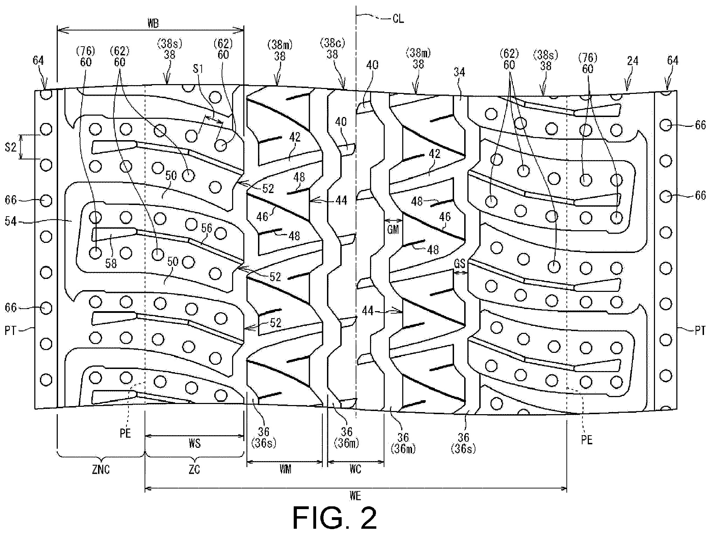

FIG. 2 shows a part of the tread surface 24. In FIG 2, the left-right direction is the axial direction of the tire 2, and the up-down direction is the circumferential direction of the tire 2. A direction perpendicular to the paper surface of FIG 2 is the radial direction of the tire 2.

A groove 34 is carved in the tread 4 of the tire 2. Accordingly, a tread pattern is formed. As the groove 34 constituting the tread pattern, at least two circumferential grooves 36 extending in the circumferential direction are carved in the tread 4. Accordingly, in the tread 4, at least three land parts 38 are formed arranged side by side in the axial direction. In the tire 2, four circumferential grooves 36 are carved in the tread 4, and five land parts 38 are formed in the tread 4. Among the grooves 34 constituting the tread pattern, the groove 34 having a groove width of 2.0 mm or less is referred to as a sipe.

In the tire 2, the four circumferential grooves 36 are each continuous in the circumferential direction. As shown in FIG 2, the circumferential groove 36 extends while meandering. The circumferential groove 36 may be configured to extend in a zigzag manner or may be configured to extend linearly.

In the tire 2, among the four circumferential grooves 36, the circumferential groove 36 located on an outer side in the axial direction is a shoulder circumferential groove 36s. The circumferential groove 36 located inside the shoulder circumferential groove 36s is a middle circumferential groove 36m. In the tire 2, the four circumferential grooves 36 include a pair of middle circumferential grooves 36m disposed to sandwich the equatorial plane therebetween and a pair of shoulder circumferential grooves 36s each located outside the middle circumferential groove 36m.

In FIG 2, a two-way arrow WE indicates an axial distance from one grounding end PE to the other grounding end PE. In the tire 2, the axial distance WE is a grounding width. A two-way arrow GM indicates a groove width of the middle circumferential groove 36m. A two-way arrow GS indicates a groove width of the shoulder circumferential groove 36s. The grounding width WE, the groove width GM, and the groove width GS are measured in the developed view of the tread surface 24.

In the tire 2, from the viewpoint of adjusting rigidity of the tread 4 while ensuring a drainage property, a ratio (GM/WE) of the groove width GM of the middle circumferential groove 36m to the grounding width WE is preferably 0.035 or more, and preferably 0.060 or less. From the same viewpoint, a ratio (GS/WE) of the groove width GS of the shoulder circumferential groove 36s to the grounding width WE is preferably 0.035 or more, and preferably 0.060 or less.

In FIG 1, a two-way arrow DM indicates a groove depth of the middle circumferential groove 36m. A two-way arrow DS indicates a groove depth of the shoulder circumferential groove 36s. The groove depth DM and the groove depth DS are measured in the tire 2 in the normal state.

In the tire 2, from the viewpoint of adjusting the rigidity of the tread 4 while ensuring the drainage property, a ratio (DM/WE) of the groove depth DM of the middle circumferential groove 36m to the grounding width WE is preferably 0.040 or more, and preferably 0.085 or less. From the same viewpoint, a ratio (DS/WE) of the groove depth DS of the shoulder circumferential groove 36s to the grounding width WE is preferably 0.040 or more, and preferably 0.085 or less.

In the tire 2, among the five land parts 38, the land part 38 located on the outer side in the axial direction is a shoulder land part 38s, the land part 38 located inside the shoulder land part 38s is a middle land part 38m, and the land part 38 located inside the middle land part 38m is a center land part 38c. In the tire 2, the center land part 38c is defined between two middle circumferential grooves 36m, and the center land part 38c is located on the equatorial plane. The middle land part 38m is defined between the middle circumferential groove 36m and the shoulder circumferential groove 36s. The shoulder land part 38s is located outside the shoulder circumferential groove 36s in the axial direction and includes the grounding end PE. The five land parts 38 include the center land part 38c, a pair of middle land parts 38m, and a pair of shoulder land parts 38s.

In FIG 2, a two-way arrow WC indicates a width of the center land part 38c. The width WC is represented by an axial distance from one axially outer end to the other axially outer end of the center land part 38c. A two-way arrow WM indicates a width of the middle land part 38m. The width WM is represented by an axial distance from one axially inner end to the other axially outer end of the middle land part 38m. A two-way arrow WS indicates a width of the shoulder land part 38s. The width WS is represented by an axial distance from an axially inner end of the shoulder land part 38s to the grounding end PE. The width WS is a width of the shoulder land part 38s included in the grounding surface. The width WC, the width WM and the width WS are measured in the developed view of the tread surface 24.

In the tire 2, from the viewpoint of adjusting the rigidity of the tread 4 while ensuring the drainage property, a ratio (WC/WE) of the width WC of the center land part 38c to the grounding width WE is preferably 0.10 or more, and preferably 0.20 or less. From the same viewpoint, a ratio (WM/WE) of the width WM of the middle land part 38m to the grounding width WE is preferably 0.12 or more, and preferably 0.22 or less. From the same viewpoint, a ratio (WS/WE) of the width WS of the shoulder land part 38s to the grounding width WE is preferably 0.15 or more, and preferably 0.25 or less.

In the center land part 38c of the tire 2, multiple lateral grooves (hereinafter center lateral grooves 40) are carved as the groove 34 constituting the tread pattern. These center lateral grooves 40 are disposed at intervals in the circumferential direction. Each center lateral groove 40 has an end within the center land part 38c. This end is located on the equatorial plane, and the center lateral groove 40 connects this end with the middle circumferential groove 36m. As shown in FIG 2, the center lateral groove 40 provided on one edge of the center land part 38c and the center lateral groove 40 provided on the other edge of the center land part 38c are alternately disposed in the circumferential direction. A groove width and a groove depth of the center lateral groove 40 are appropriately determined in consideration of the specifications of the tire 2.

In the middle land part 38m of the tire 2, multiple lateral grooves (hereinafter middle lateral grooves 42) are carved as the groove 34 constituting the tread pattern. These middle lateral grooves 42 are disposed at intervals in the circumferential direction. Each middle lateral groove 42 connects the middle circumferential groove 36m with the shoulder circumferential groove 36s. A groove width and a groove depth of the middle lateral groove 42 are appropriately determined in consideration of the specifications of the tire 2.

The middle lateral groove 42 crosses the middle land part 38m. By carving multiple middle lateral grooves 42 in the middle land part 38m, multiple blocks (hereinafter middle blocks 44) are formed. The middle land part 38m includes multiple middle blocks 44 arranged side by side in the circumferential direction.

In the middle block 44 of the tire 2, one open sipe 46 and two dead-end sipes 48 are carved as the groove 34 (specifically, a sipe) constituting the tread pattern. In the tire 2, the open sipe 46 and the dead-end sipe 48 have a groove width of 1.0 mm or less.

The open sipe 46 connects the middle circumferential groove 36m with the shoulder circumferential groove 36s. The two dead-end sipes 48 are disposed to sandwich the open sipe 46 therebetween. Each dead-end sipe 48 has an end within the middle block 44. One dead-end sipe 48 connects the end with the middle circumferential groove 36m. The other dead-end sipe 48 connects the end with the shoulder circumferential groove 36s.

In the shoulder land part 38s of the tire 2, multiple lateral grooves (hereinafter shoulder lateral grooves 50) are carved as the groove 34 constituting the tread pattern. These shoulder lateral grooves 50 are disposed at intervals in the circumferential direction. Each shoulder lateral groove 50 extends from the shoulder circumferential groove 36s toward the end PT of the tread 4. A groove width and a groove depth of the shoulder lateral groove 50 are appropriately determined in consideration of the specifications of the tire 2.

The shoulder lateral groove 50 crosses the shoulder land part 38s. By carving multiple shoulder lateral grooves 50 in the shoulder land part 38s, multiple blocks (hereinafter shoulder blocks 52) are formed. The shoulder land part 38s includes multiple shoulder blocks 52 arranged side by side in the circumferential direction.

As shown in FIG 2, in the tire 2, multiple longitudinal grooves 54 as the groove 34 constituting the tread pattern are carved in an axially outer portion of the shoulder block 52. The longitudinal grooves 54 are disposed at intervals in the circumferential direction. Each longitudinal groove 54 connects ends of two shoulder lateral grooves 50 with each other. In the shoulder land part 38s of the tire 2, the shoulder block 52 with the longitudinal groove 54 carved therein and the shoulder block 52 without the longitudinal groove 54 carved therein are alternately disposed in the circumferential direction. A groove width and a groove depth of the longitudinal groove 54 are appropriately determined in consideration of the specifications of the tire 2.

In the shoulder block 52 of the tire 2, a wide sipe 56 is carved as the groove 34 (specifically, a sipe) constituting the tread pattern. A groove width of the wide sipe 56 is greater than the groove width of the open sipe 46 and the dead-end sipe 48 described above.

The wide sipe 56 has an end within the shoulder block 52. The wide sipe 56 connects the end with the shoulder circumferential groove 36s. In the shoulder block 52 of the tire 2, a depression 58 is further carved outside the wide sipe 56. The wide sipe 56 is connected at an end thereof to the depression 58.

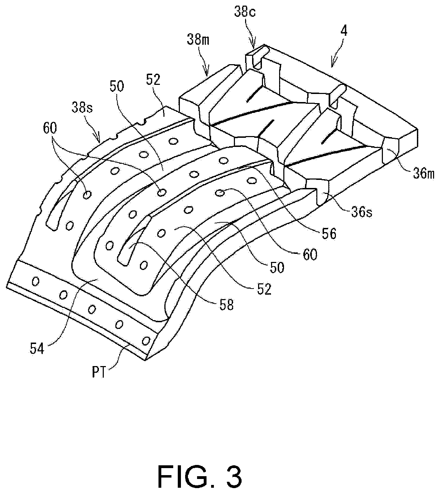

FIG. 3 shows the shoulder land part 38s of the tread 4. In the tire 2, multiple dimples 60 having a cylindrical shape are carved in the shoulder block 52. These dimples 60 are circular holes and extend inward from an outer surface of the shoulder block 52.

Ten dimples 60 are carved in the shoulder block 52 of the tire 2. In the tire 2, the number of the dimple 60 provided in the shoulder block 52 is not particularly limited, and is appropriately determined in consideration of the size of the shoulder block 52 and the influence of provision of the dimple 60 on performance.

In the tire 2, if multiple dimples 60 are scattered on the outer surface of the shoulder block 52, the arrangement of these dimples 60 is not particularly limited.

In the tire 2, two dimple rows each including five dimples 60 are formed. As shown in FIG 3, the two dimple rows are disposed to sandwich the wide sipe 56 therebetween. In the tire 2, in each dimple row, five dimples 60 are disposed at intervals from an equatorial plane side (specifically, an edge toward the shoulder circumferential groove 36s) toward the end PT of the tread 4.

In the tire 2, the number of the dimple row provided in the shoulder block 52 and the number of the dimple 60 included in one dimple row are appropriately determined in consideration of the size of the shoulder block 52 and the influence of provision of the dimple 60 on performance. In the tire 2, from the viewpoint of demonstrating an effect of providing the dimple 60, the number of the dimple row provided in the shoulder block 52 is preferably one or more, and preferably three or less. More preferably, the number of the dimple row is two. The number of the dimple 60 included in one dimple row is preferably 5 or more, and preferably 10 or less.

As described above, the shoulder land part 38s includes the grounding end PE. As shown in FIG 2, the shoulder land part 38s is divided into a grounding zone ZC from the equatorial plane side to the grounding end PE and a non-grounding zone ZNC from the grounding end PE to the end PT of the tread 4.

As shown in FIG 2, in the shoulder block 52 in the grounding zone ZC, multiple dimples 60 (specifically, six dimples 60) are provided. In the tire 2, the dimple 60 provided in the grounding zone ZC is a first dimple 62.

Rigidity of the shoulder block 52 affects the generation of pattern noise. In the tire 2, multiple first dimples 62 having a cylindrical shape are carved in the shoulder block 52 in the grounding zone ZC. Since the rigidity of the shoulder block 52 is rightly reduced, an impact applied when the tread 4 hits the road surface is suppressed. Since the input received at the time of contacting the road surface is attenuated, pattern noise is reduced. In the tire 2, quietness may be improved.

In the tire 2, there is no need to adopt a thick tread for the tread 4 in order to reduce pattern noise. On the contrary, the first dimple 62 contributes to a reduction of mass of the tread 4. In the tire 2, weight and rolling resistance may be reduced.

In the tire 2, since the first dimple 62 has a cylindrical shape, unlike a sipe, the first dimple 62 is less likely to become a starting point of cracks. Even if the tire 2 travels on a rough road, the occurrence of cracks such as those identified in the case of adding a sipe may be suppressed. In the tire 2, good chipping resistance is maintained even though the first dimple 62 is provided in the shoulder block 52.

Since the first dimple 62 is a so-called hole, the first dimple 62 contributes to mud scraping during travel on a rough road such as a muddy land. In the tire 2, good mud performance may be achieved. During travel on a rock road surface composed of bedrock, the shoulder block 52 whose rigidity is moderately reduced by the first dimple 62 is able to sufficiently grasp a rock. The tire 2 is able to travel firmly on the rock road surface. In the tire 2, good rock performance may be achieved. The tire 2 has excellent off-road performance.

The tire 2 is able to reduce pattern noise while ensuring the required chipping resistance and off-road performance. The required chipping resistance and off-road performance mean achievement of an acceptable level equivalent to that of a conventional tire.

In the tire 2, in the non-grounding zone ZNC, the buttress 64 is defined between the shoulder block 52 and the end PT of the tread 4. In the tire 2, a radially inner end of the buttress 64 is the end PT of the tread 4. A radially outer end of the buttress 64 is an axially outer end of the shoulder block 52. The buttress 64 extends in the circumferential direction.

In the tire 2, multiple dimples (hereinafter second dimples 66) having a cylindrical shape are carved in the buttress 64. These second dimples 66 are disposed at intervals in the circumferential direction. In the tire 2, one dimple row is formed composed of multiple second dimples arranged side by side in the circumferential direction. Multiple dimple rows may be formed in the buttress 64.

The second dimple 66 provided in the buttress 64 reduces rigidity of the shoulder land part 38s. In the tire 2, the second dimple 66 contributes to the suppression of the impact applied when the tread 4 hits the road surface. Since the input received at the time of contacting the road surface is attenuated, pattern noise is reduced. In the tire 2, quietness may be improved.

In the tire 2, there is no need to adopt a thick tread for the tread 4 in order to reduce pattern noise. On the contrary, the second dimple 66 contributes to a reduction of mass of the tread 4. In the tire 2, weight and rolling resistance may be reduced.

In the tire 2, since the second dimple 66 has a cylindrical shape, the second dimple 62 is less likely to become a starting point of cracks. Even if the tire 2 travels on a rough road and the buttress 64 comes into contact with the rough road, the occurrence of cracks starting from the second dimple 66 may be suppressed. In the tire 2, good chipping resistance is maintained even though the second dimple 66 is provided in the buttress 64.

Since the second dimple 66 is a so-called hole, the second dimple 66 contributes to mud scraping in the case where the buttress 64 comes into contact with a rough road. The second dimple 66 contributes to an improvement in the mud performance. Since the second dimple 66 contributes to a reduction of the rigidity of the shoulder land part 38s, even if the buttress 64 is in contact with a rock road surface, the shoulder land part 38s is able to sufficiently grasp a rock. The tire 2 is able to travel firmly on the rock road surface. The second dimple 66 contributes to an improvement in the rock performance. The second dimple 66 contributes to an improvement in the off-road performance.

In the tire 2, by carving multiple second dimples 66 in the buttress 64, the required chipping resistance and off-road performance are ensured, and pattern noise is reduced. From this viewpoint, in the tire 2, preferably, multiple second dimples 66 having a cylindrical shape are carved in the buttress 64.

In the tire 2 shown in FIG 1, multiple first dimples 62 are carved in the shoulder block 52 in the grounding zone ZC, and multiple second dimples 66 are carved in the buttress 64 in the non-grounding zone ZNC. In the tire 2, it may also be that no second dimple 66 is carved in the buttress 64, and multiple first dimples 62 are carved only in the shoulder block 52 in the grounding zone ZC. It may also be that no first dimple 62 is carved in the shoulder block 52 in the grounding zone ZC, and multiple second dimples 66 are carved only in the buttress 64 in the non-grounding zone ZNC. From the viewpoint of being able to sufficiently reduce pattern noise while effectively ensuring the required chipping resistance and off-road performance, as shown in FIG 2 and FIG 3, more preferably, multiple first dimples 62 are carved in the shoulder block 52 in the grounding zone ZC and multiple second dimples 66 are carved in the buttress 64 in the non-grounding zone ZNC. In this case, the first dimple 62 and the second dimple 66 may be configured to have the same or different specifications.

In FIG 1, a two-way arrow HB indicates a radial distance from the grounding end PE to the end PT of the tread 4. In the tire 2, the radial distance HB is measured in the normal state.

In the tire 2, from the viewpoint that the second dimple 66 carved in the buttress 64 is able to effectively ensure the required chipping resistance and off-road performance and reduce pattern noise, a ratio (HB/HS) of the radial distance HB to the cross-sectional height HS is preferably 5% or more, and preferably 15% or less.

In FIG 2, a two-way arrow WB indicates an axial distance from an axially inner end to the axially outer end of the shoulder block 52. In the tire 2, the axial distance WB is a width of the shoulder block 52. A two-way arrow S1 indicates the interval between the first dimples 62. The interval S1 is represented by a shortest distance between adjacent first dimples 62. A two-way arrow S2 indicates the interval between the second dimples 66. The interval S2 is represented by a shortest distance between adjacent second dimples 66. The width WB, the interval S1 and the interval S2 are measured in the developed view of the tread surface 24.

In the tire 2, from the viewpoint of ensuring the required chipping resistance, a ratio (S1/WB) of the interval S1 between the first dimples 62 to the width WB of the shoulder block 52 is preferably 0.10 or more, more preferably 0.13 or more. From the viewpoint of ensuring the required off-road performance and reducing pattern noise, the ratio (S1/WB) is preferably 0.20 or less, more preferably 0.17 or less.

In the tire 2, from the viewpoint of ensuring the required chipping resistance, the interval S2 between the second dimples is preferably 5.0 mm or more, more preferably 6.5 mm or more. From the viewpoint of ensuring the required off-road performance and reducing pattern noise, the interval S2 is preferably 10.0 mm or less, more preferably 8.5 mm or less.

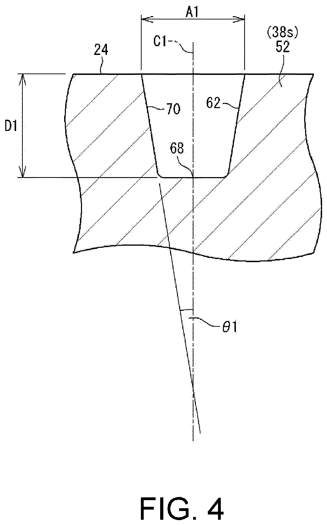

FIG. 4 shows a cross section of the first dimple 62. A dot-and-dash line C1 is a centerline of the first dimple 62. As shown in FIG 4, the first dimple 62 is tapered toward a bottom 68. The first dimple 62 may also be configured in a columnar shape. In FIG 4, an angle θ1 is an angle formed by a wall surface 70 of the first dimple 62 with respect to the centerline C1. In the tire 2, the angle θ1 is set in a range of 0 ° or more to 30 ° or less.

In FIG 4, a two-way arrow A1 indicates a diameter of the first dimple 62. In the tire 2, the diameter A1 is represented by a diameter at an opening edge of the first dimple 62. A two-way arrow D1 indicates a depth of the first dimple 62. The depth D1 is represented by a distance from the opening edge of the first dimple 62 to the bottom 68.

In the tire 2, the diameter A1 of the first dimple 62 is preferably 2 mm or more, and preferably 5 mm or less. By setting the diameter A1 to 2 mm or more, the first dimple 62 effectively ensures the required off-road performance and reduces pattern noise. From this viewpoint, the diameter A1 is more preferably 3 mm or more. By setting the diameter A1 to 5 mm or less, the first dimple 62 effectively ensures the required chipping resistance. From this viewpoint, the diameter A1 is more preferably 4 mm or less.

In the tire 2, a ratio (D1/DS) of the depth D1 of the first dimple 62 to the groove depth DS of the circumferential groove 36 (specifically, the shoulder circumferential groove 36s that divides the shoulder land part 38s) is preferably 25% or more, and preferably 65% or less. By setting the ratio (D1/DS) to 25% or more, the first dimple 62 effectively ensures the required off-road performance and reduces pattern noise. From this viewpoint, the ratio (D1/DS) is more preferably 30% or more, and even more preferably 35% or more. By setting the ratio (D1/DS) to 65% or less, the first dimple 62 effectively ensures the required chipping resistance. From this viewpoint, the ratio (D1/DS) is more preferably 60% or less, and even more preferably 55% or less.

From the viewpoint that the first dimple 62 is able to more effectively ensure the required chipping resistance and off-road performance and reduce pattern noise, the diameter A1 of the first dimple 62 is more preferably 2 mm or more to 5 mm or less, and the ratio (D1/DS) of the depth D1 of the first dimple 62 to the groove depth DS of the shoulder circumferential groove 36s is more preferably 25% or more to 65% or less.

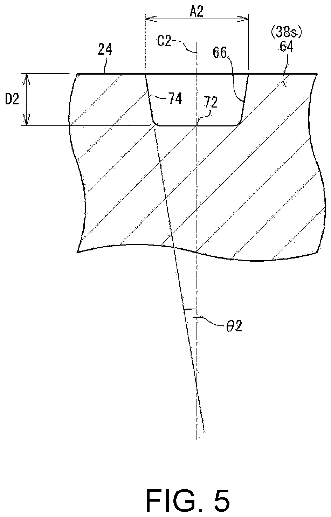

FIG. 5 shows a cross section of the second dimple 66. A dot-and-dash line C2 is a centerline of the second dimple 66. As shown in FIG 5, the second dimple 66 is tapered toward a bottom 72. The second dimple 66 may also be configured in a columnar shape. In FIG 5, an angle θ2 is an angle formed by a wall surface 74 of the second dimple 66 with respect to the centerline C2. In the tire 2, the angle θ2 is set in a range of 0 ° or more to 30 ° or less.

In FIG 5, a two-way arrow A2 indicates a diameter of the second dimple 66. In the tire 2, the diameter A2 is represented by a diameter at an opening edge of the second dimple 66. A two-way arrow D2 indicates a depth of the second dimple 66. The depth D2 is represented by a distance from the opening edge of the second dimple 66 to the bottom 72.

In the tire 2, the diameter A2 of the second dimple 66 is preferably 2 mm or more, and preferably 5 mm or less. By setting the diameter A2 to 2 mm or more, the second dimple 66 effectively ensures the required off-road performance and reduces pattern noise. From this viewpoint, the diameter A2 is more preferably 3 mm or more. By setting the diameter A2 to 5 mm or less, the second dimple 66 effectively ensures the required chipping resistance. From this viewpoint, the diameter A2 is more preferably 4 mm or less.

In the tire 2, a ratio (D2/DS) of the depth D2 of the second dimple 66 to the groove depth DS of the circumferential groove 36 (specifically, the shoulder circumferential groove 36s that divides the shoulder land part 38s) is preferably 5% or more, and preferably 15% or less. By setting the ratio (D2/DS) to 5% or more, the second dimple 66 effectively ensures the required off-road performance and reduces pattern noise. From this viewpoint, the ratio (D2/DS) is more preferably 8% or more. By setting the ratio (D2/DS) to 15% or less, the second dimple 66 effectively ensures the required chipping resistance. From this viewpoint, the ratio (D2/DS) is more preferably 12% or less.

From the viewpoint that the second dimple 66 is able to more effectively ensure the required chipping resistance and off-road performance and reduce pattern noise, the diameter A2 of the second dimple 66 is more preferably 2 mm or more to 5 mm or less, and the ratio (D2/DS) of the depth D2 of the second dimple 66 to the groove depth DS of the shoulder circumferential groove 36s is more preferably 5% or more to 15% or less.

As shown in FIG 2, in the tire 2, multiple dimples 60 are also provided between the grounding zone ZC and the buttress 64.

The shape of the grounding surface of the tire 2 in a traveling state changes according to the situation. Depending on the situation, a grounding end may be located outside the grounding end PE as a reference. In this case, among the multiple dimples located between the grounding zone ZC and the buttress 64, the dimple 60 located toward the grounding zone ZC is included in the grounding surface. This dimple 60 functions as the first dimple 62. When off-road, a radially outer portion of the buttress 64 also comes into contact with the road surface. In this case, among the multiple dimples 60 located between the grounding zone ZC and the buttress 64, the dimple 60 located toward the buttress 64 functions as the second dimple 66.

In the tire 2, the multiple dimples 60 located between the grounding zone ZC and the buttress 64 also relatively effectively ensure the required chipping resistance and off-road performance and reduce pattern noise. From this viewpoint, in the shoulder block 52 between the grounding zone ZC and the buttress 64, multiple dimples 60 (hereinafter third dimples 76) having a cylindrical shape are preferably carved. In this case, since the third dimple 76 is carved in the shoulder block 52, the third dimple 76 is configured to have the same specifications as the first dimple 62.

As described above, according to the invention, the tire 2 may be obtained that is able to reduce pattern noise while ensuring the required chipping resistance and off-road performance. The tire 2 exhibits a particularly remarkable effect when used as an SUV tire. Examples

Hereinafter, the invention will be described in more detail by way of examples.

### [Example 1]

An SUV tire (tire size = 265/65R18) was obtained having the basic configurations shown in FIG 1 to FIG 3 and having the specifications shown in Table 1 below.

In Example 1, a dimple was carved in a shoulder block and a buttress. This is indicated by "D" in the column of tread in Table 1.

The dimple carved in the shoulder block had a diameter of 3.5 mm, a ratio of a depth of the dimple to the groove depth DS of a shoulder circumferential groove was 45%, and a ratio of an interval between the dimples to the width WB of the shoulder block was 0.13. Among the dimples carved in the shoulder block, the dimple included in the grounding zone ZC was a first dimple. Thus, the diameter A1 of the first dimple was 3.5 mm, the ratio (D1/DS) of the depth D1 of the first dimple to the groove depth DS of the shoulder circumferential groove was 45%, and the ratio (S1/WB) of the interval S1 between the first dimples to the width WB of the shoulder block was 0.13.

The diameter A2 of the dimple (that is, a second dimple) carved in the buttress was 3.5 mm, the ratio (D2/DS) of the depth D2 of the second dimple to the groove depth DS of the shoulder circumferential groove was 10%, and the interval S2 between the second dimples was 7.5 mm.

### [Comparative Example 1]

A tire of Comparative Example 1 was obtained in the same manner as in Example 1 except that no dimple was carved in the shoulder block and the buttress.

### [Comparative Example 2]

A tire of Comparative Example 2 was obtained in the same manner as in Comparative Example 1 except that a tread was configured to be 1 mm thicker than a tread of Comparative Example 1. The adoption of the thick tread is indicated by "T" in the column of tread in Table 1 below. Comparative Example 2 was a tire adopting the thick tread as a measure for reducing pattern noise.

### [Comparative Example 3]

A tire of Comparative Example 3 was obtained in the same manner as in Comparative Example 1 except that a sipe was carved in the shoulder block of Comparative Example 1. The adoption of a tread in which a sipe was carved in the shoulder block is indicated by "S" in the column of tread in Table 1 below. Comparative Example 3 was a tire adopting the tread in which the sipe was carved in the shoulder block as a measure for reducing pattern noise.

### [Example 2]

A tire of Example 2 was obtained in the same manner as in Example 1 except that no dimple was carved in the buttress.

### [Example 3]

A tire of Example 3 was obtained in the same manner as in Example 1 except that no dimple was carved in the shoulder block.

### [Examples 4 to 5]

Tires of Examples 4 to 5 were obtained in the same manner as in Example 1 except that an outer diameter of the dimple to be carved in the shoulder block and the buttress was changed and that the diameter A1 of the first dimple and the diameter A2 of the second dimple were as shown in Table 2 below.

### [Examples 6 to 7]

Tires of Examples 6 to 7 were obtained in the same manner as in Example 1 except that a depth of the dimple to be carved in the shoulder block and the buttress was changed and that the ratio (D1/DS) and the ratio (D2/DS) were as shown in Table 2 below.

### [Examples 8 to 9]

Tires of Examples 8 to 9 were obtained in the same manner as in Example 1 except that the number of the dimple to be carved in the buttress was adjusted and that the interval S2 between the second dimples was as shown in Table 3 below.

### [Examples 10 to 11]

Tires of Examples 10 to 11 were obtained in the same manner as in Example 1 except that the number of the dimple to be carved in the shoulder block was adjusted and that the ratio (S1/WB) was as shown in Table 3 below.

### [Traveling Performance]

A prototype tire was assembled onto a rim (size = 8.0J) and filled with air to adjust an internal pressure of the tire to 230 kPa. The tire was mounted on a test vehicle (SUV), and a driver caused the test vehicle to travel in a test course including a dry asphalt road surface, a mud road surface and a rock road surface. For the quietness, a state of occurrence of pattern noise on the dry asphalt road surface was identified. For the off-road performance, sensory evaluation was performed on the degree of occurrence of traction on the mud road surface and the rock road surface. Results thereof are shown as indices in Tables 1 to 3 below. In terms of quietness, it is shown that the larger the value, the less the pattern noise. In terms of off-road performance, it is shown that the larger the value, the better the traction obtained.

### [Chipping Resistance]

The tire after being evaluated for traveling performance was observed for its appearance, and a state of occurrence of chipping was identified. Results thereof are shown as indices in Tables 1 to 3 below. It is shown that the larger the value, the more the occurrence of chipping is suppressed. In this evaluation, if an index is 95 or more, even if less than 100, it is acceptable as reduction in the chipping resistance is suppressed.

### [Overall Performance]

Total values of the quietness, the off-road performance and the chipping resistance are shown as the overall performance in Tables 1 to 3 below. The larger the value, the more preferable it is.

**Table 1**

| | Comparative Example 1 | Comparative Example 2 | Comparative Example 3 | Example 1 | Example 2 | Example 3 |
|---|---|---|---|---|---|---|
| Tread | - | T | S | D | D | D |
| A1 [mm] | - | - | - | 3.5 | 3.5 | - |
| DIIDS [%] | - | - | - | 45 | 45 | - |
| SIIWB [-] | - | - | - | 0.13 | 0.13 | - |
| A2 [mm] | - | - | - | 3.5 | - | 3.5 |
| D2/DS [%] | - | - | - | 10 | - | 10 |
| S2 [mm] | - | - | - | 7.5 | - | 7.5 |
| Quietness | 100 | 110 | 110 | 115 | 110 | 108 |
| Off-road performance | 100 | 100 | 100 | 115 | 108 | 110 |
| Chipping resistance | 100 | 100 | 90 | 100 | 100 | 100 |
| Overall performance | 300 | 310 | 300 | 330 | 318 | 318 |

**Table 2**

| | Example 4 | Example 5 | Example 6 | Example 7 |
|---|---|---|---|---|
| Tread | D | D | D | D |
| A1 [mm] | 2.0 | 5.0 | 3.5 | 3.5 |
| DIIDS [%] | 45 | 45 | 25 | 65 |
| SIIWB [-] | 0.13 | 0.13 | 0.13 | 0.13 |
| A2 [mm] | 2.0 | 5.0 | 3.5 | 3.5 |
| D2/DS [%] | 10 | 10 | 5 | 15 |
| S2 [mm] | 7.5 | 7.5 | 7.5 | 7.5 |
| Quietness | 110 | 125 | 110 | 115 |
| Off-road performance | 110 | 125 | 110 | 115 |
| Chipping resistance | 100 | 95 | 100 | 97 |
| Overall performance | 320 | 345 | 320 | 327 |

**Table 3**

| | Example 8 | Example 9 | Example 10 | Example 11 |
|---|---|---|---|---|
| Tread | D | D | D | D |
| A1 [mm] | 3.5 | 3.5 | 3.5 | 3.5 |
| DIIDS [%] | 45 | 45 | 45 | 45 |
| SIIWB [-] | 0.13 | 0.13 | 0.10 | 0.20 |
| A2 [mm] | 3.5 | 3.5 | 3.5 | 3.5 |
| D2/DS [%] | 10 | 10 | 10 | 10 |
| S2 [mm] | 5.0 | 10.0 | 7.5 | 7.5 |
| Quietness | 115 | 110 | 115 | 110 |
| Off-road performance | 115 | 110 | 115 | 110 |
| Chipping resistance | 97 | 100 | 97 | 100 |
| Overall performance | 327 | 320 | 327 | 320 |

As shown in Tables 1 to 3, compared to the Comparative Examples, in the Examples, the pattern noise was reduced while the required chipping resistance and off-road performance were ensured. Comparative Example 2 had the same performance as the Examples in terms of quietness, off-road performance and chipping resistance. However, in Comparative Example 2, an increase in the rolling resistance due to adoption of a thick tread was identified. In contrast, in the Examples, a reduction in the rolling resistance was also identified. From the above evaluation results, the superiority of the disclosure is clear.

The technique for reducing pattern noise while ensuring the required chipping resistance and off-road performance described above may be applied to various tires.

## Claims

1. A tire (2) comprising a tread (4) contacting a road surface, wherein:
at least two circumferential grooves (36) are carved in the tread (4), and at least three land parts (38) are formed arranged side by side in an axial direction;
a land part (38) located on an outer side in the axial direction among the at least three land parts (38) is a shoulder land part (38s);
the shoulder land part (38s) comprises a plurality of shoulder blocks (52) arranged side by side in a circumferential direction;
the shoulder land part (38s) is divided into a grounding zone (ZC) from an equatorial plane side to a grounding end (PE) and a non-grounding zone (ZNC) from the grounding end (PE) to an end (PT) of the tread (4); and
a plurality of first dimples (62) having a cylindrical shape or being tapered toward their bottom (68) are carved in the shoulder blocks (52) in the grounding zone (ZC),
**characterized in that** a ratio of a radial distance (HB) from the grounding end (PE) to the end (PT) of the tread (4) to a cross-sectional height (HS) is 5 % or more to 15 % or less.

2. The tire (2) according to claim 1, wherein:
the first dimples (62) has a diameter (A1) of 2 mm or more to 5 mm or less; and
a ratio of a depth (D1) of the first dimples (62) to a groove depth (DS) of the circumferential grooves (36) is 25% or more to 65% or less.

3. The tire (2) according to claim 1 or 2, wherein:
the plurality of the first dimples (62) are disposed at intervals (S1) from the equatorial plane side toward the end (PT) of the tread (4); and
a ratio of the intervals (S1) between the first dimples (62) to a width (WB) of the shoulder blocks (52) is 0.10 or more to 0.20 or less.

4. The tire (2) according to any one of claims 1 to 3, wherein:
an angle (θ1) formed by a wall surface (70) of the first dimples (62) with respect to a centerline (C1) is 0° or more to 30° or less.

5. The tire (2) according to any one of claims 1 to 4, wherein:
in the non-grounding zone (ZNC), a buttress (64) extending in the circumferential direction is defined between the shoulder blocks (52) and the end (PT) of the tread (4); and
a plurality of second dimples (66) having a cylindrical shape or being tapered toward their bottom (72) are carved in the buttress (64).

6. The tire (2) according to claim 5, wherein:
the second dimples (66) have a diameter (A2) of 2 mm or more to 5 mm or less; and
a ratio of a depth (D2) of the second dimples (66) to a groove depth (DS) of the circumferential grooves (36) is 5% or more to 15% or less.

7. The tire (2) according to claim 5 or 6, wherein:
the plurality of the second dimples (66) are disposed at intervals (S2) in the circumferential direction; and
the intervals (S2) between the second dimples (66) are 5.0 mm or more to 10.0 mm or less.

8. The tire (2) according to any one of claims 5 to 7, wherein:
an angle (θ2) formed by a wall surface (74) of the second dimples (66) with respect to a centerline (C2) of the second dimples (66) is 0° or more to 30° or less.

## Patentansprüche

1. Reifen (2), der eine Lauffläche (4) umfasst, die eine Straßenoberfläche berührt, wobei:
mindestens zwei Umfangsrillen (36) in die Lauffläche (4) eingearbeitet sind und mindestens drei Landteile (38) gebildet sind, die nebeneinander in einer axialen Richtung angeordnet sind;
ein Landteil (38), der sich auf einer Außenseite in der axialen Richtung unter den mindestens drei Landteilen (38) befindet, ein Schulterlandteil (38s) ist;
der Schulterlandteil (38s) eine Vielzahl von Schulterblöcken (52) umfasst, die nebeneinander in einer Umfangsrichtung angeordnet sind;
der Schulterlandteil (38s) in eine Bodenzone (ZC) von einer Äquatorebenenseite zu einem Bodenende (PE) und eine Nicht-Bodenzone (ZNC) von dem Bodenende (PE) zu einem Ende (PT) der Lauffläche (4) unterteilt ist; und
eine Vielzahl von ersten Vertiefungen (62), die eine zylindrische Form aufweisen oder in Richtung ihres Bodens (68) verjüngt sind, in die Schulterblöcke (52) in der Bodenzone (ZC) eingearbeitet sind,
**dadurch gekennzeichnet, dass** ein Verhältnis eines radialen Abstands (HB) von dem Bodenende (PE) zu dem Ende (PT) der Lauffläche (4) zu einer Querschnittshöhe (HS) 5 % oder mehr bis 15 % oder weniger beträgt.

2. Reifen (2) nach Anspruch 1, wobei:
die ersten Vertiefungen (62) einen Durchmesser (A1) von 2 mm oder mehr bis 5 mm oder weniger aufweisen; und
ein Verhältnis einer Tiefe (D1) der ersten Vertiefungen (62) zu einer Rillentiefe (DS) der Umfangsrillen (36) 25 % oder mehr bis 65 % oder weniger beträgt.

3. Reifen (2) nach Anspruch 1 oder 2, wobei:
die Vielzahl von ersten Vertiefungen (62) in Intervallen (S1) von der Äquatorebenenseite zu dem Ende (PT) der Lauffläche (4) angeordnet sind; und
ein Verhältnis der Intervalle (S1) zwischen den ersten Vertiefungen (62) zu einer Breite (WB) der Schulterblöcke (52) 0,10 oder mehr bis 0,20 oder weniger beträgt.

4. Reifen (2) nach einem der Ansprüche 1 bis 3, wobei:
ein Winkel (θ1), der durch eine Wandoberfläche (70) der ersten Vertiefungen (62) in Bezug auf eine Mittellinie (C1) gebildet ist, 0° oder mehr bis 30° oder weniger beträgt.

5. Reifen (2) nach einem der Ansprüche 1 bis 4, wobei:
in der Nicht-Bodenzone (ZNC) eine Abstützung (64), die sich in der Umfangsrichtung erstreckt, zwischen den Schulterblöcken (52) und dem Ende (PT) der Lauffläche (4) definiert ist; und
eine Vielzahl von zweiten Vertiefungen (66), die eine zylindrische Form aufweisen oder in Richtung ihres Bodens (72) verjüngt sind, in die Abstützung (64) eingearbeitet sind.

6. Reifen (2) nach Anspruch 5, wobei:
die zweiten Vertiefungen (66) einen Durchmesser (A2) von 2 mm oder mehr bis 5 mm oder weniger aufweisen; und
ein Verhältnis einer Tiefe (D2) der zweiten Vertiefungen (66) zu einer Rillentiefe (DS) der Umfangsrillen (36) 5 % oder mehr bis 15 % oder weniger beträgt.

7. Reifen (2) nach Anspruch 5 oder 6, wobei:
die Vielzahl von zweiten Vertiefungen (66) in Intervallen (S2) in der Umfangsrichtung angeordnet sind; und
die Intervalle (S2) zwischen den zweiten Vertiefungen (66) 5,0 mm oder mehr bis 10,0 mm oder weniger betragen.

8. Reifen (2) nach einem der Ansprüche 5 bis 7, wobei:
ein Winkel (θ2), der durch eine Wandfläche (74) der zweiten Vertiefungen (66) in Bezug auf eine Mittellinie (C2) der zweiten Vertiefungen (66) gebildet ist, 0° oder mehr bis 30° oder weniger beträgt.

## Revendications

1. Pneumatique (2) comprenant une bande de roulement (4) venant en contact avec une surface routière, dans lequel :
au moins deux rainures circonférentielles (36) sont sculptées dans la bande de roulement (4), et au moins trois parties en relief (38) sont formées, agencées côte à côte dans une direction axiale ;
une partie en relief (38) située sur un côté extérieur dans la direction axiale parmi lesdites au moins trois parties en relief (38) est une partie en relief d'épaulement (38s) ;
la partie en relief d'épaulement (38s) comprend une pluralité de blocs d'épaulement (52) agencés côte à côte dans une direction circonférentielle ;
la partie en relief d'épaulement (38s) est divisée en une zone de contact au sol (ZC) depuis un côté de plan d'équateur jusqu'à une extrémité de contact au sol (PE) et une zone de non-contact au sol (ZNC) depuis l'extrémité de contact au sol (PE) jusqu'à une extrémité (PT) de la bande de roulement (4) ; et
une pluralité de premières alvéoles (62) ayant une forme cylindrique ou étant effilées vers leur fond (68) sont sculptées dans les blocs d'épaulement (52) dans la zone de contact au sol (ZC),
**caractérisé en ce que**
un rapport d'une distance radiale (HB) depuis l'extrémité de contact au sol (PE) jusqu'à l'extrémité (PT) de la bande de roulement (4) sur une hauteur de section transversale (HS) est de 5 % ou plus à 15 % ou moins.

2. Pneumatique (2) selon la revendication 1, dans lequel :
les premières alvéoles (62) ont un diamètre (A1) de 2 mm ou plus à 5 mm ou moins ; et
un rapport d'une profondeur (D1) des premières alvéoles (62) sur une profondeur de rainure (DS) des rainures circonférentielles (36) est de 25 % ou plus à 65 % ou moins.

3. Pneumatique (2) selon la revendication 1 ou 2, dans lequel :
la pluralité de premières alvéoles (62) sont disposées à des intervalles (S1) depuis le côté de plan d'équateur vers l'extrémité (PT) de la bande de roulement (4) ; et
un rapport des intervalles (S1) entre les premières alvéoles (62) sur une largeur (WB) des blocs d'épaulement (52) est de 0,10 ou plus à 0,20 ou moins.

4. Pneumatique (2) selon l'une quelconque des revendications 1 à 3, dans lequel :
un angle (θ1) formé par une surface de paroi (70) des premières alvéoles (62) par rapport à une ligne centrale (C1) est de 0° ou plus à 30° ou moins.

5. Pneumatique (2) selon l'une quelconque des revendications 1 à 4, dans lequel :
dans la zone de non-contact au sol (ZNC), un contrefort (64) s'étendant dans la direction circonférentielle est défini entre les blocs d'épaulement (52) et l'extrémité (PT) de la bande de roulement (4) ; et
une pluralité de secondes alvéoles (66) ayant une forme cylindrique ou étant effilées vers leur fond (72) sont sculptées dans le contrefort (64).

6. Pneumatique (2) selon la revendication 5, dans lequel :
les secondes alvéoles (66) ont un diamètre (A2) de 2 mm ou plus à 5 mm ou moins ; et
un rapport d'une profondeur (D2) des secondes alvéoles (66) sur une profondeur de rainure (DS) des rainures circonférentielles (36) est de 5 % ou plus à 15 % ou moins.

7. Pneumatique (2) selon la revendication 5 ou 6, dans lequel :
la pluralité de secondes alvéoles (66) sont disposées à des intervalles (S2) dans la direction circonférentielle ; et
les intervalles (S2) entre les secondes alvéoles (66) sont de 5,0 mm ou plus à 10,0 mm ou moins.

8. Pneumatique (2) selon l'une quelconque des revendications 5 à 7, dans lequel :
un angle (θ2) formé par une surface de paroi (74) des secondes alvéoles (66) par rapport à une ligne centrale (C2) des secondes alvéoles (66) est de 0° ou plus à 30° ou moins.
